# EUROPEAN PATENT APPLICATION

(11) **EP 4 495 721 A1**
(43) Date of publication of application: **22.01.2025**
(21) Application number: 23770536.3
(22) Date of filing: 07.03.2023
(51) Int. Cl.: G05B 19/418, G06Q 50/04

(54) **DATA ANALYSIS SYSTEM, DATA ANALYSIS DEVICE, DATA ANALYSIS METHOD, AND COMPUTER PROGRAM**

(30) Priority: 15.03.2022 JP 2022040380
(71) Applicant: Tokyo Electron Limited, Tokyo 107-6325 (JP)
(72) Inventor: KITSUNEZUKA, Masaki, Sapporo City, Hokkaido 060-0003 (JP); TAMURA, Jun, Kurokawa-gun, Miyagi 981-3629 (JP); MURATA, Tsutomu, Sapporo City, Hokkaido 060-0003 (JP); SHIGA, Masahiro, Sapporo City, Hokkaido 060-0003 (JP); MORIYA, Tsuyoshi, Tokyo 107-6325 (JP); KATAOKA, Yuki, Sapporo City, Hokkaido 060-0003 (JP)
(74) Representative: dompatent von Kreisler Selting Werner - Partnerschaft von Patent- und Rechtsanwälten mbB
(86) International application number: PCT/JP2023/008515
(87) International publication number: WO 2023/176580

(57) **Abstract**

Provided is a data analysis system, a data analysis device, a data analysis method, and a computer program. The data analysis system includes: a first data conversion device configured to conceal first data on a first product manufactured in a first manufacturing system and output the first data as first concealed data; and a data analysis device configured to select an element of the first concealed data that affects second data on a second product manufactured using the first product by evaluating a degree of influence between the first concealed data and the second data.

## Description

### [Technical Field]

The present disclosure relates to a data analysis system, a data analysis device, a data analysis method, and a computer program.

### [Background Art]

Companies may form an inter-company network when promoting business. Typical examples of such an inter-company network includes a supply chain.

The supply chain includes organizations such as suppliers, assemblers, manufacturers, makers, and buyers, is a network in which procurement and shipment at the organizations are continuous, and is a network that progresses from the procurement of raw materials to the sale of final products.

In the supply chain, identifiers are assigned to parts in circulation, and when a defect occurs in a product downstream of the supply chain, IDs of the parts causing the defect is provided to an upstream parts maker. The parts maker compares the ID with data held by the parts maker to investigate the cause of the defect.

### [Prior Art Document]

### [Patent Document]

[Patent Document 1] Patent Document 1: JP2007-213506A

### [Summary of Invention]

### [Problems to be Solved by Invention]

The present disclosure provides a data analysis system, a data analysis device, a data analysis method, and a computer program that can identify a cause of a defect that occurs due to a complex cause across organizations.

### [Means for Solving Problems]

A data analysis system according to one aspect of the present disclosure includes: a first data conversion device configured to conceal first data on a first product manufactured in a first manufacturing system and output the first data as first concealed data; and a data analysis device configured to select an element of the first concealed data that affects second data on a second product manufactured using the first product by evaluating a degree of influence between the first concealed data and the second data.

### [Effects of Invention]

According to the present disclosure, it is possible to identify the cause of the defect that occurs due to a complex cause across makers.

### [Brief Description of Drawings]

FIG. 1 is an explanatory diagram illustrating a configuration example of a data analysis system according to Embodiment 1.
FIG. 2 is a block diagram illustrating a configuration of an analysis device.
FIG. 3 is an explanatory diagram illustrating a creation example of concealed data.
FIG. 4 is an explanatory diagram illustrating element selection by the analysis device.
FIG. 5 is a schematic diagram illustrating a display example in the analysis device.
FIG. 6A is a schematic diagram illustrating a display example in a first data conversion device.
FIG. 6B is a schematic diagram illustrating a display example in the first data conversion device.
FIG. 7A is an explanatory diagram illustrating an optimization method by an optimization device.
FIG. 7B is an explanatory diagram illustrating an optimization method using the optimization device.
FIG. 8 is a flowchart illustrating a procedure of processing executed in the data analysis system according to Embodiment 1.
FIG. 9 is an explanatory diagram illustrating a configuration example of a data analysis system according to Embodiment 2.
FIG. 10 is an explanatory diagram illustrating a configuration example of a data analysis system according to Embodiment 3.
FIG. 11 is an explanatory diagram illustrating a configuration example of a data analysis system according to Embodiment 4.

### [Mode for Carrying out Invention]

### (Embodiment 1)

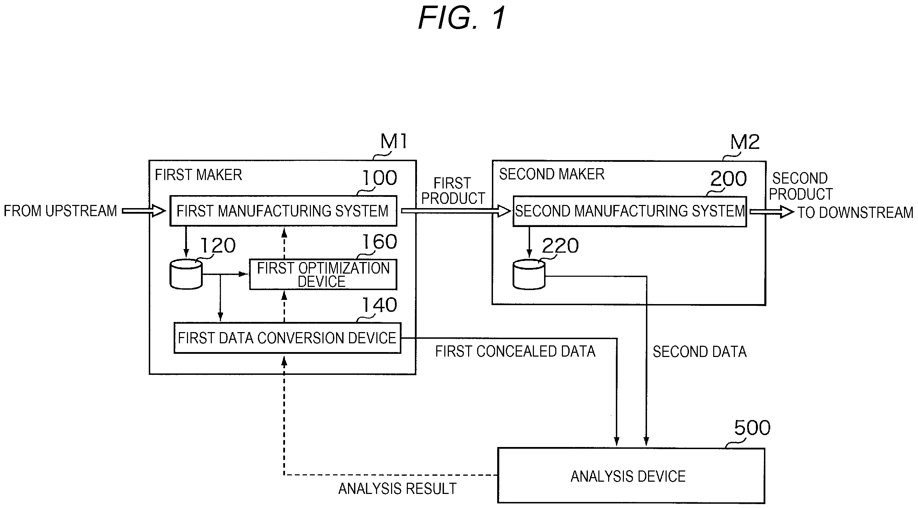

FIG. 1 is an explanatory diagram illustrating a configuration example of a data analysis system according to Embodiment 1. The data analysis system according to Embodiment 1 is a system for implementing the circulation, integration, analysis, and feedback of data across a supply chain. In the example illustrated in FIG. 1, a first maker M1 that manufactures a first product by procuring parts and materials from an upstream side and a second maker M2 that manufactures a second product by procuring the first product manufactured by the first maker M1 are illustrated among organizations implementing the supply chain. The upstream side and downstream side of the first maker M1 and the upstream side and downstream side of the second maker M1 may be provided with other organizations such as other makers, a supplier, an assembler, a manufacturer, and a buyer.

Hereinafter, an application example of the present invention will be described assuming that the first maker M1 is a maker of manufacturing a semiconductor manufacturing device by procuring parts from the upstream side and the second maker M2 is a maker of manufacturing a semiconductor device by introducing the semiconductor manufacturing device manufactured by the first maker M1.

The first maker M1 includes a first manufacturing system 100, a first database 120, a first data conversion device 140, and a first optimization device 160.

The first manufacturing system 100 is a system for manufacturing the first product (the semiconductor manufacturing device). The first product manufactured by the first manufacturing system 100 includes apparatuses such as an exposure apparatus, a resist processing apparatus, an etching apparatus, a cleaning and drying apparatus, a film forming apparatus, an ion implantation apparatus, and an inspection apparatus. Manufacturing steps include steps of procuring, storing, processing, assembling, and inspecting materials.

The first database 120 stores data on the first product manufactured in the first manufacturing system 100. Here, the data on the first product is data set or measured in the manufacturing step of the first product. These pieces of data may include, for example, identification information on a device serving as an output source of the data, such as a serial number assigned to each product or a device model number indicating a device type. The data may further include actual number information representing conditions in the manufacturing step such as temperature and pressure. The data may further include actual number information output from the inspection step as a manufacturing result such as a film thickness, a shape, and a characteristic value.

The first data conversion device 140 has a function of concealing the data and a function of decoding the concealed data. For example, when the data stored in the first database 120 is provided to an outside, the first data conversion device 140 can read target data from the first database 120 and provide the read data to the outside in a concealed manner. A concealment method will be described later in detail. A destination to which the data is provided is, for example, an analysis device 500. When the concealed data is acquired from the outside, the first data conversion device 140 decodes the acquired data and transmits the decoded data to, for example, the first optimization device 160.

The first optimization device 160 optimizes a manufacturing parameter in the first manufacturing system 100 by referring to the data stored in the first database 120 and the data received through the first data conversion device 140.

The second maker M2 includes a second manufacturing system 200 and a second database 220.

The second manufacturing system 200 is a system for manufacturing the second product (the semiconductor device) and includes the semiconductor manufacturing device introduced from the first manufacturing system 100. The second product manufactured by the second manufacturing system 200 is a semiconductor device such as a diode, a transistor, a light-emitting device, a light-receiving device, an IC, a microcomputer, a CPU, or a memory. Manufacturing steps thereof include steps such as an exposure step, a resist step, an etching configuration, a cleaning and drying step, a film formation step, an ion implantation step, and an inspection step.

The second database 220 stores data on the second product manufactured in the second manufacturing system 200. Here, the data on the second product is data set or measured in the manufacturing step of the second product. These pieces of data include, for example, a serial number assigned to each product, a product model number indicating a product type, and measured values such as a current, a voltage, a temperature, pressure, and a film thickness measured in the inspection step. In Embodiment 1, the data stored in the second database 220 is provided to the analysis device 500 without being concealed.

The data analysis system according to the present embodiment includes the analysis device 500 that acquires data from the makers implementing the supply chain and analyzes the data across the supply chain. To perform the analysis, the analysis device 500 acquires data (first concealed data) concealed by the first data conversion device 140 for the first product manufactured in the first manufacturing system 100. The analysis device 500 acquires data (second data) provided by the second manufacturing system 200 without being concealed for the second product manufactured in the second manufacturing system 200. The analysis device 500 selects an element of the first concealed data that affects the second data by evaluating a degree of influence between the acquired first concealed data and the acquired second data and outputs a selection result.

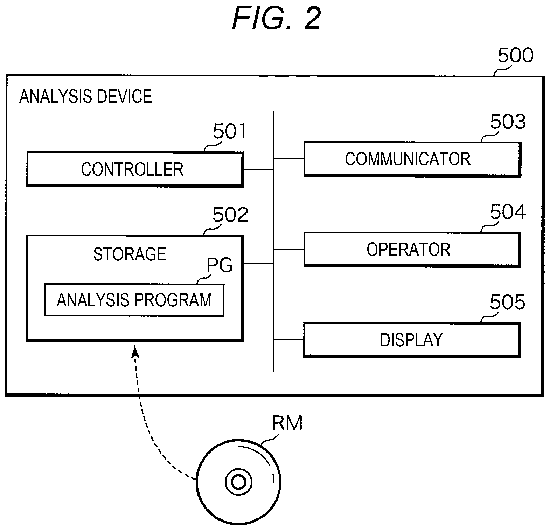

FIG. 2 is a block diagram illustrating a configuration of the analysis device 500. The analysis device 500 is a dedicated or general-purpose computer such as a server computer and includes a controller 501, a storage 502, a communicator 503, an operator 504, and a display 505.

The controller 501 includes a central processing unit (CPU), a read only memory (ROM), a random access memory (RAM), and the like. The ROM provided in the controller 501 stores control programs for controlling operations of the parts of the hardware. The CPU in the controller 501 reads and executes the control programs stored in the ROM and various computer programs stored in the storage 502 and controls the operations of the parts of the hardware to cause the entire device to function as a data analysis device of the present disclosure. The RAM provided in the controller 501 temporarily stores data used during the execution of an arithmetic operation.

In the embodiment, although the controller 501 includes the CPU, the ROM, and the RAM, the configuration of the controller 501 is not limited to the above-described configuration. The controller 501 may be, for example, one or a plurality of control circuits or arithmetic circuits that include a graphic processing unit (GPU), a field programmable gate array (FPGA), a digital signal processor (DSP), a quantum processor, a volatile or nonvolatile memory, or the like. In addition, the controller 501 may include functions such as a clock for outputting date and time information, a timer for measuring the time elapsed from the time when a measurement start instruction is applied to the time when a measurement end instruction is applied, and a counter for counting the number.

The storage 502 includes storage devices such as a hard disk drive (HDD), a solid state drive (SSD), and an electronically erasable programmable read only memory (EEPROM). The storage 502 stores various types of computer programs executed by the controller 501 and various data used by the controller 501.

The computer programs stored in the storage 502 includes an analysis program PG for analyzing the data acquired from the first maker M1, the second maker M2, ... The analysis program PG may be a single computer program or may be implemented by a plurality of computer programs. In addition, the analysis program PG may partially use an existing library.

A computer program such as the analysis program PG stored in the storage 502 is provided by a non-temporary recording medium RM in which the computer program is readably recorded. The recording medium RM is a portable memory such as a CD-ROM, a USB memory, a secure digital (SD) card, a micro SD card, or a compact flash (registered trademark). The controller 501 reads various types of computer programs from the recording medium RM using a reading device (not illustrated) and stores the read various types of computer programs in the storage 502. In addition, the computer program stored in the storage 502 may be provided through communication. In this case, the controller 501 may acquire the computer program through the communicator 503 and store the acquired computer program in the storage 502.

The communicator 503 includes a communication interface for transmitting and receiving various data. The communication interface provided in the communicator 503 is, for example, a communication interface conforming to a communication standard of a LAN used in WiFi (registered trademark) or Ethernet (registered trademark). In a case where data to be transmitted is input from the controller 501, the communicator 503 transmits data to be transmitted to the designated destination. In addition, in a case where data transmitted from an external device is received, the communicator 503 outputs the received data to the controller 501.

The operator 504 includes an operation device such as a touch panel, a keyboard, and a switch and receives inputs of various operations and data input by a user. The controller 501 performs appropriate controls based on various types of operation information supplied from the operator 504 and stores the input data in the storage 502 as necessary.

The display 505 includes a display device such as a liquid crystal display or an organic electro-luminescence (EL) display, and displays information to be notified to the user in response to an instruction from the controller 501.

In the present embodiment, the analysis device 500 may be a single computer or may be a computer system including computers, peripheral devices, or the like. In addition, the analysis device 500 may be a virtual machine in which entities are virtualized, or may be a cloud.

Hereinafter, the concealed data that is an analysis target will be described.

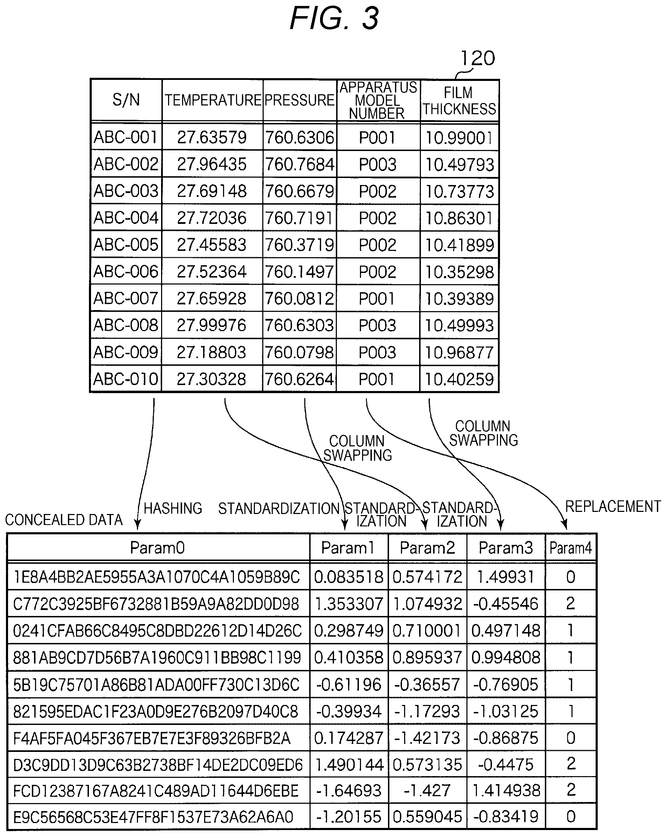

FIG. 3 is an explanatory diagram illustrating a creation example of the concealed data. As described above, the first database 120 stores the data on the first product manufactured in the first manufacturing system 100. For example, when the first product is a film forming apparatus, the data stored in the first database 120 includes data such as a serial number assigned to each product (film forming apparatus), an apparatus model number, and a temperature, a pressure, and a film thickness measured in the inspection step. The first database 120 illustrated in FIG. 3 as an example includes five columns (elements) including a serial number, a temperature, a pressure, an apparatus model number, and a film thickness. A state in which values obtained for each product are stored in each column is illustrated.

The first data conversion device 140 reads target data from the first database 120 and conceals the read data. Specifically, the first data conversion device 140 conceals the data by using at least one of column name masking, column replacement, value standardization, and dimension compression.

The example of FIG. 3 illustrates a state in which original column names "S/N", "temperature", "pressure", "apparatus model number", and "film thickness are changed to the column names [Param0], [Param2], [Param1], [Param4], and [Param3] to mask these column names, respectively to perform the concealment.

Further, the example of FIG. 3 illustrates a state in which the concealment is performed by swapping the columns of "temperature" and "pressure" and swapping the columns of "apparatus model number" and "film thickness". The first data conversion device 140 preferably stores a correspondence between the column names before and after the masking and a correspondence between the column names before and after the swapping.

The example of FIG. 3 illustrates a state in which the concealment is performed by standardizing the values of each column of "temperature", "pressure", and "film thickness". Specifically, the first data conversion device 140 may calculate an average value and a variance for each column and standardize each value based on the calculated average value and variance. The first data conversion device 140 preferably stores values of the average value and variance used for the standardization.

Further, for data commonly used by the organizations, the data may be encoded by using a common method between the organizations. For example, among the columns illustrated in FIG. 3, the serial number (S/N) of the product is used in common by the first maker M1 and the second maker M2. Therefore, the first data conversion device 140 may replace the serial number of the product with another character string by using a predetermined hash function. Any function can be used for the replacement as long as it is common among the organizations.

For data in which a type of value that appears is fixed, a predetermined number or character string may be assigned. For example, among the columns illustrated in FIG. 3, three types of values P001 to P003 are used for the apparatus model number. Therefore, the first data conversion device 140 can assign numerals of [0], [1], and [2] in an order of P001 to P003, respectively. Alternatively, a known character string such as [A], [B], and [C] may be assigned.

The creation example of the concealed data illustrated in FIG. 3 is merely an example. The first data conversion device 140 may perform appropriate concealment processing according to attributes of columns prepared in the first database 120. For example, the first data conversion device 140 may dimensionally compress the data stored in the first database 120 by using an algorithm such as principal component analysis or independent component analysis.

The analysis device 500 acquires the first concealed data concealed by the first data conversion device 140 and the second data on the second product obtained in the second manufacturing system 200 and selects the element (the column) of the first concealed data that affects the second data by evaluating the degree of influence of the first concealed data and the second data.

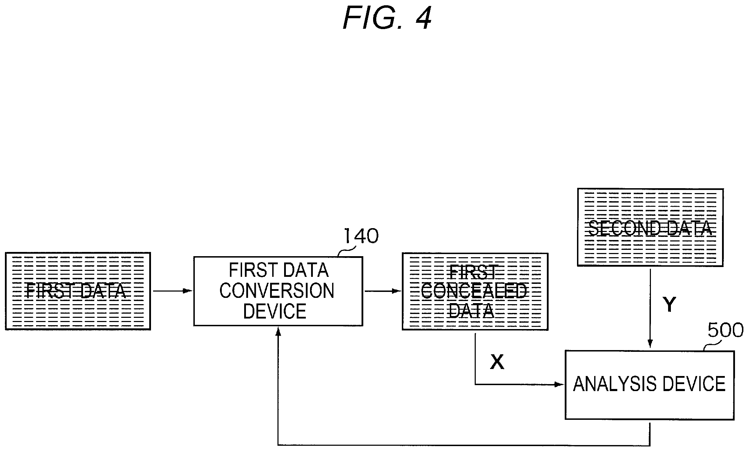

FIG. 4 is an explanatory diagram illustrating element selection by the analysis device 500. In FIG. 4, the first concealed data generated by the first data conversion device 140 will be referred to as X, and the second data generated by the second manufacturing system 200 will be referred to as Y. The first concealed data X is data including n elements (columns). Here, n is an integer of 2 or more. The first concealed data illustrated in FIG. 3 as an example has five columns, and thus a case of n = 5 is illustrated.

The analysis device 500 acquires the first concealed data X from the first data conversion device 140 and acquires the second data Y from the second manufacturing system 200. The analysis device 500 selects an element of the first concealed data X that affects the second data Y by evaluating the degree of influence between the first concealed data X and the second data Y. Specifically, by using the first concealed data X as an explanatory variable and the second data Y as an objective variable, the analysis device 500 sets a model function f (that is, Y = f(X)) for predicting the objective variable from the explanatory variable and selects a subset x of X necessary for the prediction of Y based on the set model function f. In other words, the analysis device 500 excludes columns of X unrelated to the prediction of Y.

In the present embodiment, the degree of influence of each element included in X on Y is evaluated to exclude elements unrelated to the prediction of Y. For example, the analysis device 500 can find out an element x of X that has a strong degree of influence on Y by using a statistical method (a filtering method).

Further, the analysis device 500 can find out the element x of X that has a strong degree of influence on Y with a method (an incorporation method) using a machine learning model. For example, when Y = f(X) is a linear model, a regression coefficient (an absolute value) directly represents the degree of influence if the explanatory variable X is appropriately scaled. In particular, when the unrelated elements need to be removed, a method such as Lasso (L1 regularization) may be used. Further, when Y = f(x) is a nonlinear model, the degree of influence can be evaluated by using an index such as the Gini coefficient in a random forest. An evaluation index of the degree of influence is not limited to the Gini coefficient, and an evaluation index such as a permutation feature importance, an LIME, and a SHAP may be used.

The analysis device 500 may use a wrapper method in which a feature value is input and output and an element having a strong degree of influence is selected while checking the prediction accuracy. In the wrapper method, since a machine learning model is created many times to evaluate the degree of influence and select the feature value, the degree of influence can be evaluated with high accuracy even though it takes a long calculation time.

When it is determined based on the evaluation of the degree of influence that a specific element (referred to as an element p) among the elements of the first concealed data X particularly affects the second data Y, the analysis device 500 selects the element p and notifies the first data conversion device 140 of information on the selected element p.

The number of elements p selected by the analysis device 500 is not limited to one and may be plural. That is, the analysis device 500 may exclude the elements of the first concealed data X unrelated to the prediction of the second data Y and select the subset x of the first concealed data X necessary for the prediction of the second data Y.

In the example of FIG. 4, element selection processing between two organizations is described, and the same element selection processing can be applied to any number of organizations connected in series. For example, in a supply chain in which n organizations are connected in series, concealed data generated in an uppermost organization is referred to as an X1, concealed data generated in an organization downstream thereof is referred to as X2, ... , concealed data generated in an organization upstream of a lowermost organization is referred to as Xn-1, and data generated in the lowermost organization is referred to as Y. The analysis device 500 acquires these pieces of data from the organizations. The analysis device 500 can select an element pn-1 of the concealed data Xn-1 that affects the data Y by evaluating a degree of influence between the concealed data Xn-1 and the data Y. Next, the analysis device 500 can identify an element pn-2 of the concealed data Xn-2 that affects the element pn-1 of the concealed data Xn-1 by evaluating a degree of influence between the concealed data Xn-2 and the concealed data Xn-1. In this way, the analysis device 500 can select the element that affects each piece of data by successively performing an analysis retrospectively from the most downstream.

Further, since it is possible that the element of the concealed data that has the greatest effect on the data Y is the element pn-3 of the concealed data Xn-3, there is no need to be traced back one by one. Generally described, the analysis device 500 may perform a factor analysis while creating a prediction model such that Y = f(x1 ⊂ X1, x2 ⊂ X2, ..., xn-1 ⊂ Xn-1). In other words, the analysis device 500 may concatenate X1, X2, ... , and Xn-1 to regard as one explanatory variable X and select a subset necessary for the prediction of the objective variable Y.

The first data conversion device 140 stores the correspondence of element between the data before being concealed (the first data) and the data after being concealed (the first concealed data). Therefore, when the first data conversion device 140 is notified of the information on the element p from the analysis device 500, the first data conversion device 140 can identify the element of the first data that affects the second data based on the information on the element p.

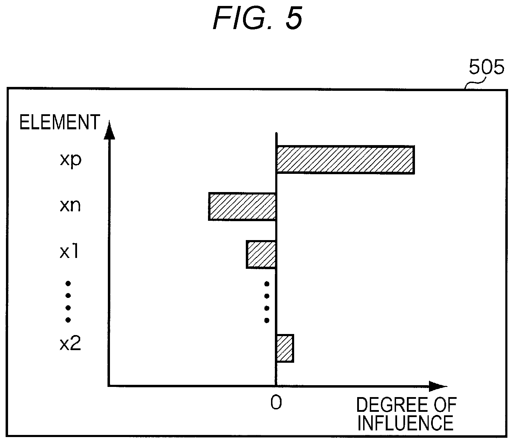

The analysis device 500 may display information on the degree of influence of each element on the display 505 in a process of selecting the element. FIG. 5 is a schematic diagram illustrating a display example in the analysis device 500. In the process of selecting the element, it is assumed that Y = f(x1, x2, ... , xn) = a1 * x1 + a2 * x2 + ... + an * xn is obtained as a model. In this case, an element having larger absolute values of the coefficients a1, a2, ..., an has a higher degree of influence on the data Y. A sign of the coefficient varies depending on whether the influence on the data Y is positive or negative. For example, the analysis device 500 can display the degree of influence of each element in the drawing by drawing the degree of influence of each element in a bar graph with a horizontal axis representing the degree of influence and a vertical axis representing the element. FIG. 5 illustrates an example in which elements are sorted in a descending order of degree of influence. In the analysis device 500, since each element (column name) is concealed, it is not possible to recognize actual column names (column names before concealment).

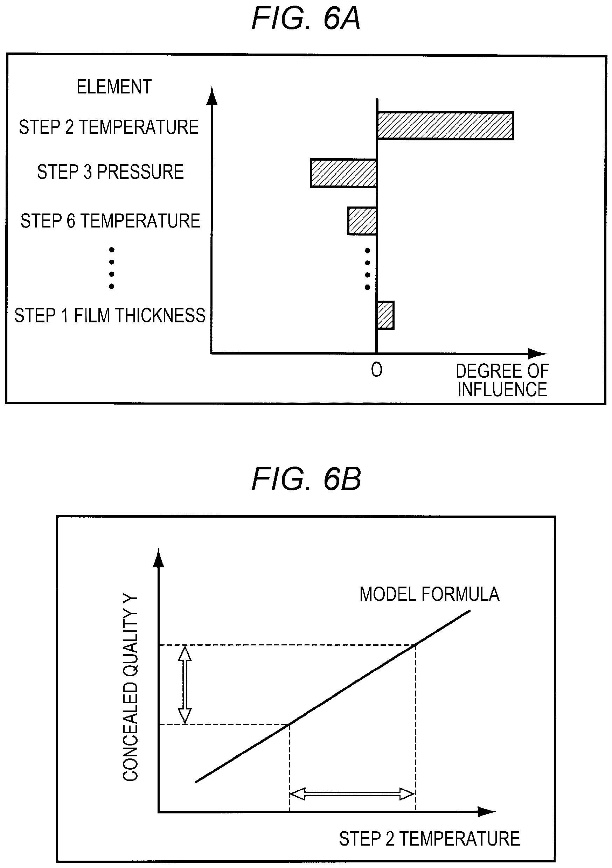

Similarly, the analysis device 500 may notify the first data conversion device 140 of the information on the degree of influence calculated for each element and display the information on the degree of influence of each element on the first data conversion device 140. FIGS. 6A and 6B are schematic diagrams illustrating display examples in the first data conversion device 140. Similar to the analysis device 500, the first data conversion device 140 can display the degree of influence of each element by drawing the degree of influence of each element in a bar graph with a horizontal axis representing the degree of influence and a vertical axis representing the element. FIG. 6A illustrates an example in which elements are sorted in a descending order of degree of influence. The first data conversion device 140 can present the column names before the concealment as the name of element by converting the data before concealment (the first data) and the data after concealment (the first concealed data) referring to the correspondence of element therebetween. Therefore, in the example of FIG. 6A, it can be seen that "temperature" in "step 2" has the greatest influence on the quality of the second product manufactured in the second manufacturing system 200.

The first data conversion device 140 may display a graph illustrating a relationship between a management range of each element and a variation range of the quality Y. In the example of FIG. 6B, a graph illustrates a relationship between a management range of "temperature" in "step 2" and a variation range of quality. The variation range of quality is, for example, a value designated by the second manufacturing system 200 and notified through the analysis device 500. By reading this graph, the user can grasp how much the variation range of the quality of the second product can be controlled by changing the management range of "temperature" in "step 2".

The first optimization device 160 optimizes the parameter in the manufacturing step of the first product by referring to the information on the element selected by the first data conversion device 140.

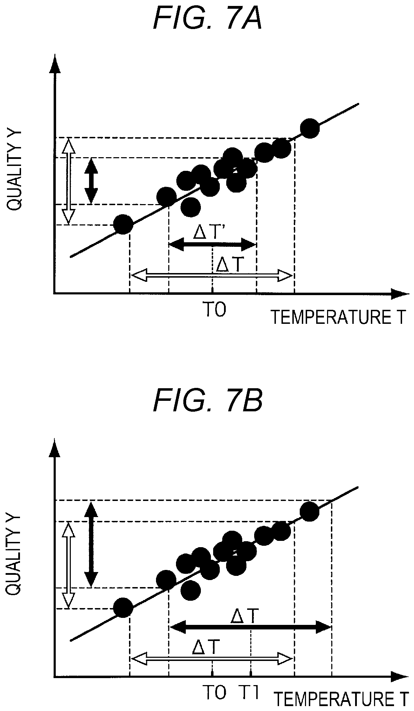

FIGS. 7A and 7B are explanatory diagrams illustrating an optimization method by the first optimization device 160. An element xp identified by the first data conversion device 140 is a temperature T of a certain step of a certain part. In this case, the first optimization device 160 optimizes a management value of a temperature condition in the step.

For example, the analysis device 500 obtains a prediction formula of Y = a * xp +... for the element xp, and the first data conversion device 140 has a corresponding formula of T = b * xp + c for the temperature T. Here, Y is data on the quality of the second product, and a, b, and c are coefficients that are optimized at the time of model creation. At this time, the first optimization device 160 determines how to set the temperature T based on the coefficients a, b, and c, and a range of Y that is desired to be implemented.

For example, the first optimization device 160 performs the management within a temperature range of T0 ± ΔT in the past, and may perform the management by T0 ± ΔT' and control the variation in quality of the second product manufactured in the second manufacturing system 200 (see FIG. 7A). Further, the first optimization device 160 performs the management within the temperature range of T0 ± ΔT in the past as illustrated in FIG. 7B, and may perform the management by T 1 ± ΔT and control an offset of quality of the second product manufactured in the second manufacturing system 200 (see FIG. 7B).

When a management value of the selected element xp cannot be changed, the first optimization device 160 may change a management value of an element having the second largest influence. Further, the first optimization device 160 may change the management values of the elements.

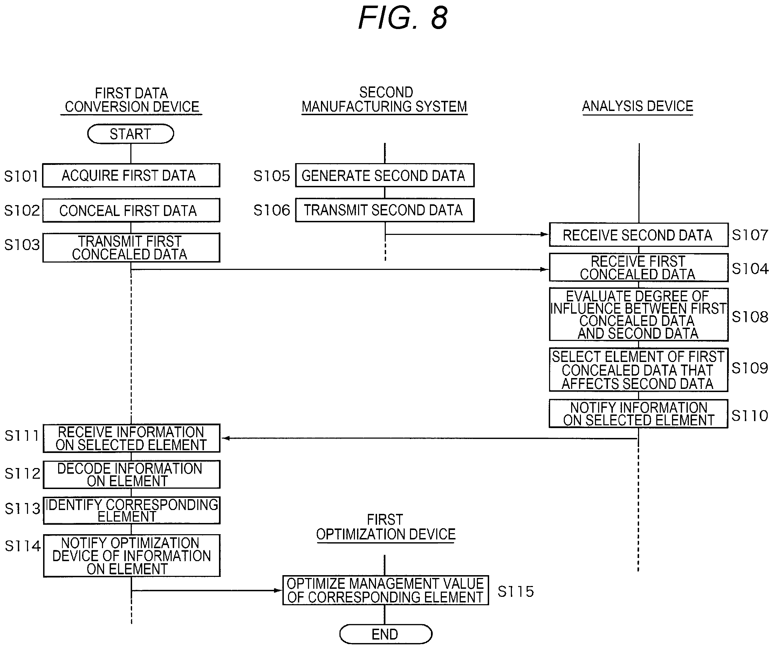

FIG. 8 is a flowchart illustrating a procedure of processing executed in the data analysis system according to Embodiment 1. When manufacturing the first product in the first manufacturing system 100, the data on the first product (the first data) is stored in the first database 120. The first data conversion device 140 acquires the first data from the first database 120 (step S101) and conceals the acquired first data (step S102). At least one of column name masking, column swapping, value standardization, and dimension compression is used to conceal the first data. The first data conversion device 140 stores, in an internal memory (not illustrated), the correspondence of element between the data before being concealed (the first data) and the data after being concealed (the first concealed data). The first data conversion device 140 transmits the first concealed data obtained by concealing the first data to the analysis device 500 (step S103).

In the second manufacturing system 200, the first product manufactured in the first manufacturing system is procured and the second product is manufactured. When manufacturing the second product, the second manufacturing system 200 generates the data on the second product (the second data) (step S105), stores the second data in the second database 220, and transmits the generated second data to the analysis device 500 (step S106).

The analysis device 500 receives the first concealed data transmitted from the first data conversion device 140 (step S104) and receives the second data transmitted from the second manufacturing system 200 (step S107).

The analysis device 500 evaluates the degree of influence between the acquired first concealed data and the second data (step S108) and selects the element of the first concealed data that affects the second data (step S109). By using the filter method, the incorporation method, the wrapper method, or the like described above, the analysis device 500 can evaluate the degree of influence on the second data for each element of the first concealed data and select an element having a high degree of influence.

The analysis device 500 notifies the first data conversion device 140 of the information on the selected element (step S110). The information notified to the first data conversion device 140 includes the column name of the element (column) selected by the analysis device 500. Since there is no need for the analysis device 500 to grasp the meaning of the selected element, for example, the column name in the masked state may be notified to the first data conversion device 140.

The first data conversion device 140 receives the information on the element notified from the analysis device 500 (step S111) and decodes the received information of the element (step S112). The first data conversion device 140 identifies an element of the first data corresponding to the element selected by the analysis device 500 by referring to the correspondence stored in the memory (step 5113). The first data conversion device 140 notifies the first optimization device 160 of the information on the identified element of the first data (step S114).

The first optimization device 160 optimizes the management value of the corresponding element based on the information notified from the first data conversion device 140 (step S115). For example, the first optimization device 160 may set a range of management value of the element based on a range of Y that is desired to be implemented for the quality Y of the second product.

As described above, the data analysis system according to Embodiment 1 evaluates the degree of influence between the first concealed data obtained by the first maker M1 and the second data obtained by the second maker M2 and selects the element of the first concealed data that affects the second data. Accordingly, even if a supply chain extends over makers, it is possible to identify an upstream data factor that influences downstream products and give a feedback to the respective makers without providing raw data (data before concealment).

### (Embodiment 2)

In Embodiment 2, a configuration in which the second maker M2 includes a data conversion device will be described.

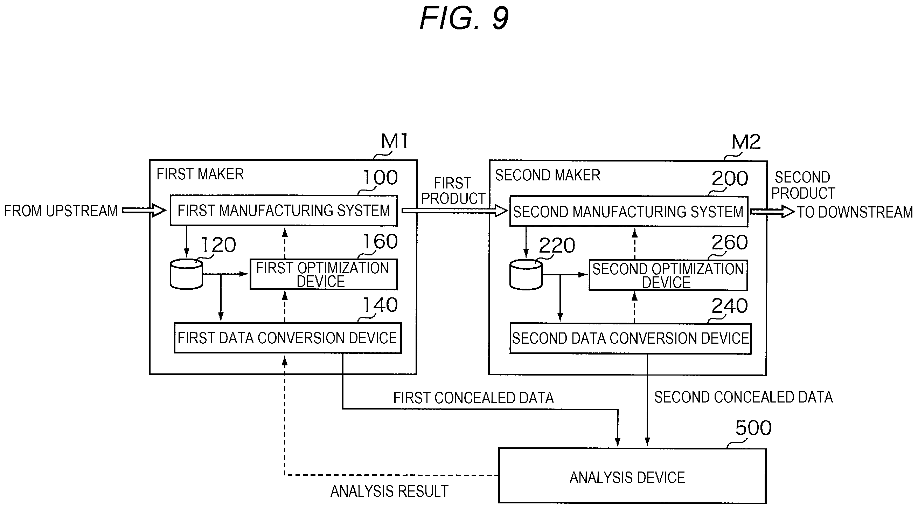

FIG. 9 is an explanatory diagram illustrating a configuration example of a data analysis system according to Embodiment 2. The first maker M1 is the same as that in Embodiment 1 and includes the first manufacturing system 100, the first database 120, the first data conversion device 140, and the first optimization device 160.

The second maker M2 includes a second data conversion device 240 and a second optimization device 260 in addition to the second manufacturing system 200 and the second database 220.

Similar to the first data conversion device 140, the second data conversion device 240 has a function of concealing data and a function of decoding the concealed data. The same concealment method as that in the first data conversion device 140 is used. That is, the second data conversion device 240 may generate second concealed data by performing at least one of column name masking, column swapping, value standardization, and dimension compression on data on the second product (second data) read from the second database 220. The second concealed data obtained from the second data conversion device 240 is provided, for example, to the analysis device 500.

The second optimization device 260 optimizes a manufacturing parameter in the second manufacturing system 200 by referring to the data stored in the second database 220 and the data received through the second data conversion device 240.

The analysis device 500 in Embodiment 2 acquires the first concealed data from the first data conversion device 140 and acquires the second concealed data from the second data conversion device 240. The analysis device 500 selects an element (a column) of the first concealed data that affects the second concealed data by evaluating a degree of influence of the acquired concealed data. A method for selecting an element is the same as that in Embodiment 1.

The analysis device 500 notifies the first data conversion device 140 of the information on the selected element. The first data conversion device 140 decodes the notified information to identify an element of the first data corresponding to the element selected by the analysis device 500. The first optimization device 160 optimizes a parameter in a manufacturing step of the first product by referring to the information on the element identified by the first data conversion device 140.

As described above, the data analysis system according to Embodiment 2 evaluates the degree of influence between the first concealed data obtained by the first maker M1 and the second concealed data obtained by the second maker M2 and selects the element of the first concealed data that affects the second concealed data. Accordingly, even if a supply chain extends over makers, it is possible to identify an upstream data factor that influences downstream products and give a feedback to the respective makers without providing raw data (data before concealment).

### (Embodiment 3)

A supply chain in Embodiment 3 includes a third maker M3 disposed in parallel with the first maker M1. The second maker M2 procures a first product manufactured by the first maker M1 and a third product manufactured by the third maker M3 to manufacture a second product.

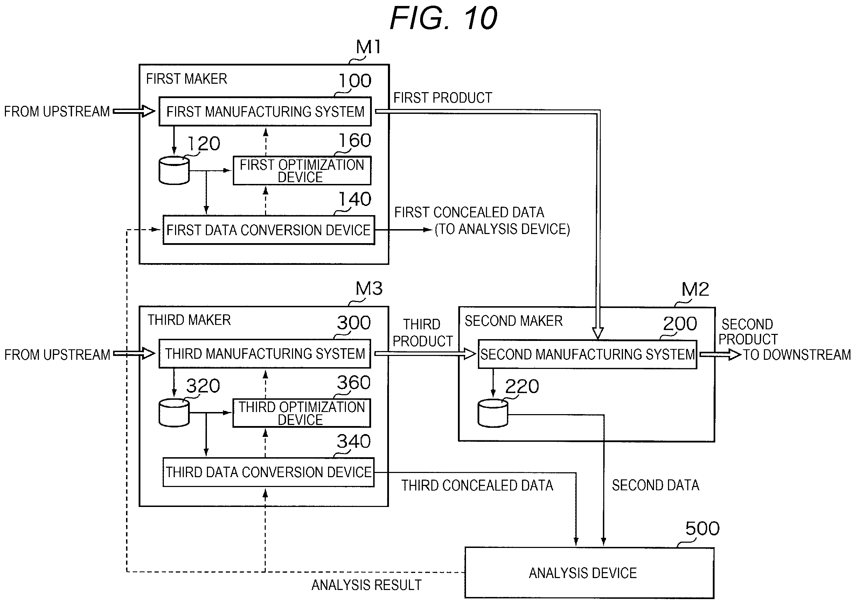

FIG. 10 is an explanatory diagram illustrating a configuration example of a data analysis system according to Embodiment 3. A configuration of the first maker M1 is the same as that in Embodiment 1. That is, the first product manufactured in the first manufacturing system 100 is supplied to the first maker, and the first concealed data obtained by concealing the first data on the first product is provided to the analysis device 500.

The second maker M2 includes the second manufacturing system 200 that procures the first product manufactured by the first maker M1 and the third product manufactured by the third maker M3 to manufacture the second product. The second manufacturing system 200 stores data on the second product (second data) in the second database 220 and provides the second data to the analysis device 500.

The third maker M3 is disposed upstream of the second maker M2. The third maker M3 includes a third manufacturing system 300, a third database 320, a third data conversion device 340, and a third optimization device 360.

The third manufacturing system 300 is a system for manufacturing the third product (for example, a semiconductor manufacturing device). The third database 320 stores data on the third product manufactured in the third manufacturing system 300. The third data conversion device 340 has a function of concealing data and a function of decoding the concealed data. The same concealment method as that in the first data conversion device 140 is used. That is, the third data conversion device 340 may generate third concealed data by performing at least one of column name masking, column swapping, value standardization, and dimension compression on the data on the third product (third data) read from the third database 320. The third concealed data obtained from the third data conversion device 340 is provided, for example, to the analysis device 500. The third optimization device 360 optimizes a manufacturing parameter in the third manufacturing system 300 by referring to the data stored in the third database 320 and the data received through the third data conversion device 340.

The analysis device 500 acquires the first concealed data provided from the first data conversion device 140, the third concealed data provided from the third data conversion device 340, and the second data provided from the second manufacturing system 200. The analysis device 500 selects elements of the first concealed data and the third concealed data that affect the second data by evaluating a degree of influence between data including the acquired first concealed data and the acquired third concealed data and the second data. A method for selecting an element is the same as that in Embodiment 1.

For example, when the first concealed data is data including n elements (x1, x2, ..., xn) and the third concealed data is data including m elements (z1, z2, ..., zm), the analysis device 500 evaluates Y = f(x1, x2, ..., xn, z1, z2, ..., zm) and selects an element having a high degree of influence on a variation of Y. At this time, the analysis device 500 may select either the element of the first concealed data or the element of the third concealed data, or may select elements from both the first concealed data and the third concealed data.

The analysis device 500 notifies the first data conversion device 140 and the third data conversion device 340 of information on the selected element. The first data conversion device 140 decodes the notified information to identify an element of the first data corresponding to the element selected by the analysis device 500. The first optimization device 160 optimizes a parameter in a manufacturing step of the first product by referring to the information on the element identified by the first data conversion device 140.

Similarly, the third data conversion device 340 decodes the notified information to identify an element of the third data corresponding to the element selected by the analysis device 500. The third optimization device 360 optimizes a parameter in a manufacturing step of the third product by referring to the information on the element identified by the third data conversion device 340.

As described above, the data analysis system according to Embodiment 3 evaluates the degree of influence between the data including the first concealed data obtained by the first maker M1 and the third concealed data obtained by the third maker M3 and the second data obtained by the second maker M2, and selects the elements of the first concealed data and the third concealed data that affect the second data. Accordingly, even if a supply chain extends over makers, it is possible to identify an upstream data factor that influences downstream products and give a feedback to the respective makers without providing raw data (data before concealment).

### (Embodiment 4)

A supply chain in Embodiment 4 includes a fourth maker M4 disposed in parallel with the second maker M2. The second maker M2 procures a first product manufactured by the first maker M1 to manufacture a second product, and the fourth maker M4 procures the first product manufactured by the first maker M1 to manufacture a fourth product.

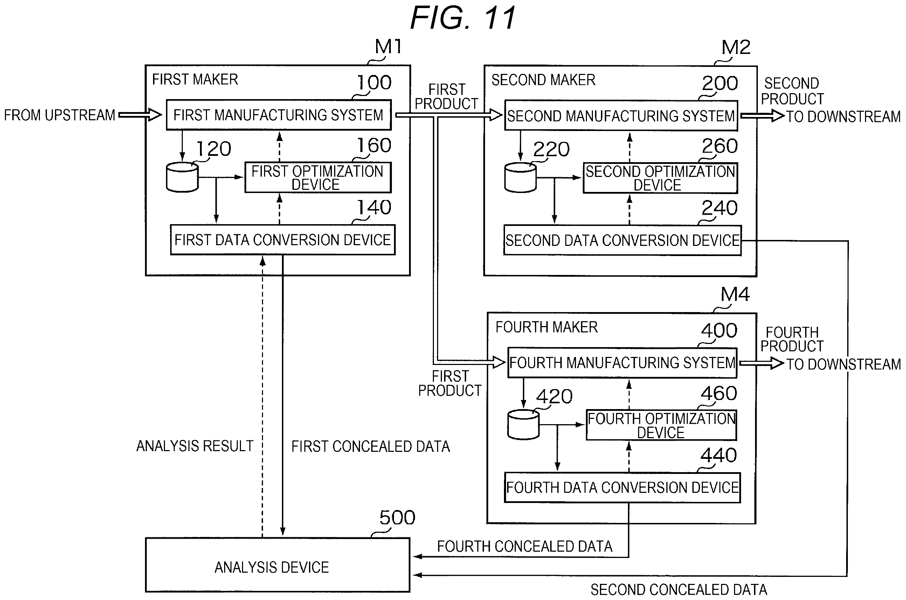

FIG. 11 is an explanatory diagram illustrating a configuration example of a data analysis system according to Embodiment 4. A configuration of the first maker M1 is the same as that in Embodiment 1. In Embodiment 4, the first product manufactured in the first manufacturing system 100 is supplied to the first maker M1 and the fourth maker M4. First concealed data obtained by concealing first data on the first product is provided to the analysis device 500.

A configuration of the second maker M2 is the same as that in Embodiment 2. The second maker M2 includes the second manufacturing system 200 for procuring the first product manufactured by the first maker M1 and manufacturing the second product. Data on the second product (second data) manufactured in the second manufacturing system 200 is stored in the second database 220, concealed, and provided to the analysis device 500 as second concealed data.

The fourth maker M4 is disposed downstream of the first maker M1 in parallel with the second maker M2. The fourth maker M4 includes a fourth manufacturing system 400, a fourth database 420, a fourth data conversion device 440, and a fourth optimization device 460.

The fourth manufacturing system 400 is a system for manufacturing the fourth product (for example, a semiconductor device). The fourth database 420 stores data on the fourth product manufactured in the fourth manufacturing system 400. The fourth data conversion device 440 has a function of concealing data and a function of decoding the concealed data. The same concealment method as that in the first data conversion device 140 is used. That is, the fourth data conversion device 440 may generate fourth concealed data by performing at least one of column name masking, column swapping, value standardization, and dimension compression on the data on the fourth product (fourth data) read from the fourth database 420. The fourth concealed data obtained from the fourth data conversion device 440 is provided, for example, to the analysis device 500. The fourth optimization device 460 optimizes a manufacturing parameter in the fourth manufacturing system 400 by referring to the data stored in the fourth database 420 and the data received through the fourth data conversion device 440.

The analysis device 500 acquires the first concealed data provided from the first data conversion device 140, the second concealed data provided from the second data conversion device 240, and the fourth concealed data provided from the fourth data conversion device 440. The analysis device 500 selects an element of the first concealed data that affects the second concealed data and the fourth concealed data by evaluating a degree of influence between the acquired first concealed data and data including the second concealed data and the fourth concealed data. A method for selecting an element is the same as that in Embodiment 1. For example, the first concealed data includes i elements v1, v2, ..., vi that affect only the second manufacturing system 200 and j elements w1, w2, ..., wj that affect only the fourth manufacturing system 400 in addition to the n elements x1, x2, ..., xn. In this case, for second concealed data Y1, the analysis device 500 identifies an element having a high degree of influence on a variation of Y1 by using Y1 = f(x1, x2, ..., xn, v1, v2, ..., vi). Further, for fourth concealed data Y2, the analysis device 500 identifies an element having a high degree of influence on a variation of Y2 by using Y2 = g(x1, x2, ..., xn, w1, w2, ..., wj). Here, f and g are independent functions, and an element can be selected independently for each of Y1 and Y2.

The analysis device 500 notifies the first data conversion device 140 of the information on the selected element. The first data conversion device 140 decodes the notified information to identify an element of the first data corresponding to the element selected by the analysis device 500. The first optimization device 160 optimizes a parameter in a manufacturing step of the first product by referring to the information on the element identified by the first data conversion device 140.

As described above, the data analysis system according to Embodiment 4 evaluates the degree of influence between the first concealed data obtained by the first maker M1 and the data including the second concealed data obtained by the second maker M2 and the fourth concealed data obtained by the fourth maker, and selects the element of the first concealed data that affects the second concealed data or the fourth concealed data. Accordingly, even if a supply chain extends over makers, it is possible to identify an upstream data factor that influences downstream products and give a feedback to the respective makers without providing raw data (data before concealment).

The embodiments disclosed herein are exemplary in all respects and are required to be considered to be not restrictive embodiments. The scope of the present invention is indicated by the scope of the claims, not the meaning described above, and is intended to include meanings equivalent to the scope of the claims and all changes within the scope.

### [Description of Reference Numerals]

- M1: First maker
- 100: First manufacturing system
- 120: First database
- 140: First data conversion device
- 160: First optimization device
- M2: Second maker
- 200: Second manufacturing system
- 220: Second database
- 500: Analysis device
- 501: Controller
- 502: Storage
- 503: Communicator
- 504: Operator
- 505: Display

## Claims

1. A data analysis system comprising:
a first data conversion device configured to conceal first data on a first product manufactured in a first manufacturing system and output the first data as first concealed data; and
a data analysis device configured to select an element of the first concealed data that affects second data on a second product manufactured using the first product by evaluating a degree of influence between the first concealed data and the second data.

2. The data analysis system according to claim 1, wherein
the second data is data concealed by a second data conversion device.

3. The data analysis system according to claim 1 or 2, further comprising:
a third data conversion device configured to conceal third data on a third product manufactured in a third manufacturing system and output the third data as third concealed data, wherein
the data analysis device select an element of the first concealed data and the third concealed data that affects the second data by evaluating a degree of influence between the second data and data including the first concealed data and the third concealed data.

4. The data analysis system according to claim 1 or 2, further comprising:
a fourth data conversion device configured to conceal fourth data on a fourth product manufactured in a fourth manufacturing system using the first product and output the fourth data as fourth concealed data, wherein
the data analysis device selects an element of the first concealed data that affects the second data and the fourth concealed data by evaluating the degree of influence between the first concealed data and the second data and a degree of influence between the first concealed data and the fourth concealed data.

5. The data analysis system according to any one of claims 1 to 4, further comprising:
a first optimization device configured to adjust a parameter in a manufacturing step of the first product based on an element of the first data corresponding to the selected element of the first concealed data.

6. The data analysis system according to claim 3, further comprising:
a third optimization device configured to adjust a parameter in a manufacturing step of the third product based on an element of the third data corresponding to the selected element of the third concealed data.

7. The data analysis system according to any one of claims 1 to 6, wherein
data on each product includes elements and values for each of the elements, and
concealment of the data includes at least one of element name masking, replacement between elements, standardization of values of elements, and dimension compression.

8. A data analysis device comprising:
a first acquirer configured to acquire first concealed data obtained by concealing first data on a first product manufactured in a first manufacturing system;
a second acquirer configured to acquire second data on a second product manufactured in a second manufacturing system using the first product;
a selector configured to select an element of the first concealed data that affects the second data by evaluating a degree of influence between the first concealed data and the second data; and
an output configured to output a selection result.

9. The data analysis device according to claim 8, wherein
the first data includes elements and values for each of the elements,
concealment of the first data includes at least one of element name masking, replacement between elements, standardization of values of elements, and dimension compression, and
the selector calculates a degree of influence of each element included in the first concealed data on the second data and selects the element of the first concealed data according to the calculated degree of influence.

10. A data analysis method for a computer to execute processing comprising:
acquiring first concealed data obtained by concealing first data on a first product manufactured in a first manufacturing system;
acquiring second data on a second product manufactured in a second manufacturing system using the first product;
selecting an element of the first concealed data that affects the second data by evaluating a degree of influence between the first concealed data and the second data; and
outputting a selection result.

11. A computer program causing a computer to execute processing comprising:
acquiring first concealed data obtained by concealing first data on a first product manufactured in a first manufacturing system;
acquiring second data on a second product manufactured in a second manufacturing system using the first product;
selecting an element of the first concealed data that affects the second data by evaluating a degree of influence between the first concealed data and the second data; and
outputting a selection result.
